# EUROPEAN PATENT SPECIFICATION

(11) **EP 2 159 754 B1**
(45) Date of publication and mention of the grant of the patent: **25.01.2012**
(21) Application number: 08163373.7
(22) Date of filing: 01.09.2008
(51) Int. Cl.: G06T 11/40

(54) **Method of and arrangement for filling a shape**
Verfahren und Anordnung zum Füllen einer Form
Procédé et agencement pour le remplissage d'une forme

(43) Date of publication of application: 03.03.2010
(73) Proprietor: Telefonaktiebolaget LM Ericsson (publ), 164 83 Stockholm (SE)
(72) Inventor: Ledfelt, Erik, SE-235 38 VELLINGE (SE); Ohlsson, Henrik, SE-212 15 MALMÖ (SE)
(74) Representative: Andersson, Karl Ola

(56) References cited:
- US-A1- 2002 097 241
- US-A1- 2006 033 745
- RUEDA A J ET AL: "RASTERIZING COMPLEX POLYGONS WITHOUT TESSELLATIONS" GRAPHICAL MODELS, ELSEVIER, SAN DIEGO, CA, US, vol. 66, no. 3, 1 May 2004 (2004-05-01), pages 127-132, XP001244485 ISSN: 1524-0703

## Description

### Technical Field

The present invention relates generally to the field of drawing shapes of graphical interfaces. In particular, it relates to the field of filling such shapes.

### Background

Drawing graphical user interfaces on a display includes many operations, such as writing text and drawing icons, lines, shapes, etc. Shapes (geometries) may be simple shapes such as rectangles and triangles, or they may be complex shapes such as a U-formed shape, a star, or a contour of a country border. Many of the operations used for drawing graphical interfaces are straightforward, while other operations used are more complex. One complex operation is that of painting (filling) the inside of a complex shape.

Any shape may be defined as a continuous line (contour or boundary) comprising one or more line segments, where each line segment may be either straight or curved. A curved line may be linearized (segmented, tessellated), i.e. approximated by a number of straight lines.

A fundamental problem when filling shapes is to decide which pixels should be painted, i.e. which pixels belong to the interior of the shape. When a shape is to be filled (i.e. the interior is to be painted), the contour of the shape is used to decide which pixels are to be painted and which are not.

In some applications, the coverage value (alpha value) is also determined for a pixel. This value defines to what extent a pixel is inside or outside the shape. The pixel is painted accordingly, e.g. only painted in part or painted in a modified color or brightness if the pixel is partly outside the shape.

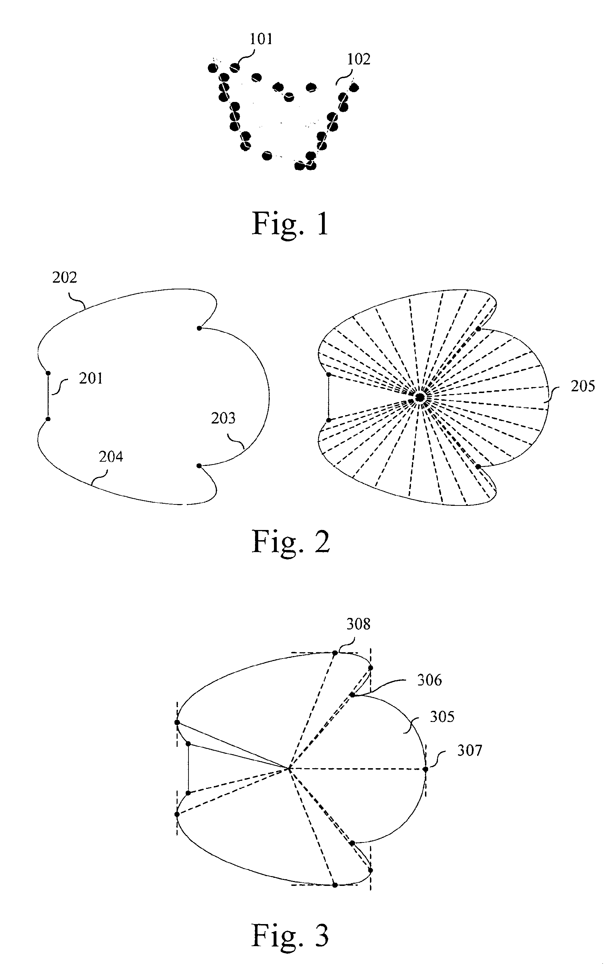

There are several ways to fill a shape. One basic method is known as scan line fill and is illustrated in Figure 1. In this method, the contour 101 is drawn (i.e. the line or lines that define the shape) and then all pixels 102 in between the lines are filled. Each scan line segment that is filled is often referred to as a span. This method is suitable for shapes that are simple and preferably convex. Non-convex shapes, such as the one illustrated in Figure 2, present more difficulties when they are to be filled. For example, with shapes where the contour crosses itself, the intersection must be treated with special care.

One (typical) way to handle complex shapes is to sort the edges of the shape and/or store temporary data in tables.

In another method of filling a shape, polygons (e.g. triangles) are drawn between two adjacent vertices on the boundary and an arbitrary point preferably inside the shape. This method is suitable for shapes where the contour is made up of straight lines or when the curved lines have been properly linearized. One way to segment a curve is to use de Casteljau's algorithm.

The scan line fill method experiences difficulties when handling shapes that are small in at least one dimension, such as a horizontal shape that is less than two pixels thick. This problem is even more complicated when the coverage value should be calculated for each pixel. The scan line fill method normally has to rely on supersampling to handle such cases.

Filling a shape by drawing triangles has the advantage that 3D-graphics hardware can be reused. Furthermore, the coverage value may be handled more correctly. However, when the shape is defined by one or more curved lines and not only by straight lines, the segmentation will consume a significant amount of processing power, and the amount of triangles will increase dramatically. The segmentation of curved lines and the potentially large number of triangles is illustrated in Figure 2, where a shape comprising a straight line 201 and three curved lines 202, 203, 204 has been segmented and divided into 36 triangles 205.

US 2006/033745 A1 discloses a graphics engine for rendering image data for display pixels in dependence upon received high-level graphics commands defining polygons including an edge draw unit to read in a command phrase of the language corresponding to a single polygon edge and convert the command to a spatial representation of the edge based on that command phrase. An electrical device incorporating the graphics engine and a memory integrated circuit having an embedded graphics engine are also disclosed.

XP001244485 (ISSN: 1524-0703) discloses similar known art for rasterization of polygons in computer graphic systems.

Thus, there is a need for improved methods and arrangements for filling a shape. For example, there is a need for methods and arrangements for filling a shape that do not rely on edge sorting, tables or extensive segmentation.

### Summary

It should be emphasized that the term "comprises/comprising" when used in this specification is taken to specify the presence of stated features, integers, steps, or components, but does not preclude the presence or addition of one or more other features, integers, steps, components, or groups thereof.

It is an object of the invention to obviate at least some of the above disadvantages and to provide improved methods and arrangements for filling a shape.

According to a first aspect of the invention, this is achieved by a method of filling a shape, suitable for use in a device having graphics processing capabilities, wherein the shape has a boundary with at least one curved line. The method comprises dividing the shape into a plurality of sub-shapes, each comprising at least first, second and third vertices, wherein at least the first and second vertices of a sub-shape are points of the boundary of the shape and wherein the first and second vertices of a sub-shape are determined as a first and second extremity point of a line of the boundary if the line is a straight line, creating a mask comprising mask elements and associated with the shape based on the plurality of sub-shapes, and using the mask to fill the shape. The method also comprises determining, for each of the at least one curved lines, if it comprises at least one point having either a horizontal or a vertical tangent. If the curved line does not comprise at least one point having either a horizontal or a vertical tangent, the method determines the first and second vertices of a sub-shape as a first and second extremity point of the curved line. If the curved line comprises at least one point having either a horizontal or a vertical tangent, the method determines at least one of the first and second vertices of a sub-shape as one of the at least one points having either a horizontal or a vertical tangent.

In some embodiments, the method may further comprise, if the curved line comprises at least one point having either a horizontal or a vertical tangent, determining the first and second vertices of a sub-shape as two adjacent points having either a horizontal or a vertical tangent, or as an extremity point of the curved line and an adjacent point having either a horizontal or a vertical tangent.

In some embodiments, the step of determining, for each of the at least one curved lines, if it comprises at least one point having either a horizontal or a vertical tangent may comprise differentiating the curved line.

In some embodiments, the third vertex may be determined as an arbitrary point of an interior of the shape, an arbitrary point external to the shape, or a point on the boundary of the shape. The third vertex may be identical for all of the plurality of sub-shapes.

In some embodiments, each sub-shape may consist of the first, second and third vertices, a first straight line between the first and third vertices, a second straight line between the second and third vertices, and either a straight or a curved line between the first and second vertices.

In some embodiments, the step of creating a mask associated with the shape based on the plurality of sub-shapes may comprise for each sub-shape: determining a bounding box based on at least the first, second and third vertices, and using the bounding box to create a sub-mask associated with the sub-shape by assigning a value to each mask element of the sub-mask. The step of creating a mask associated with the shape based on the plurality of sub-shapes may also comprise accumulating the values of each of the sub-masks to create the mask. The bounding box may be determined as a minimum rectangle enclosing at least the first, second and third vertices, and the step of using the bounding box to create a sub-mask may comprise evaluating mask elements enclosed in the bounding box. The step of creating a mask associated with the shape based on the plurality of sub-shapes may further comprise determining an orientation of the sub-shape for each sub-shape, and the assigned value may depend on the orientation.

In some embodiments, the step of determining the orientation of the sub-shape may comprise determining if the line between the first and second vertices is drawn downwards or upwards, determining if a scan line first encounters the line between the first and second vertices or another line of the sub-shape, determining the orientation as clockwise if: the line between the first and second vertices is drawn downwards and the scan line first encounters another line of the sub-shape or the line between the first and second vertices is drawn upwards and the scan line first encounters the line between the first and second vertices, and determining the orientation as anti-clockwise otherwise. The sub-shape may have a first orientation associated with a first scan line and a second orientation associated with a second scan line, the first orientation being different from the second orientation.

In some embodiments, assigning a value to each mask element of the sub-mask may comprise, for each scan line: assigning a value of zero to each mask element that is not between two lines of the sub-shape, assigning a first positive value to each mask element that is between two lines of the sub-shape if the orientation is anti-clockwise, and assigning a first negative value to each mask element that is between two lines of the sub-shape if the orientation is clockwise. Assigning a value to each mask element of the sub-mask may further comprise assigning a second positive value less than the first positive value to each mask element that is partly between two lines of the sub-shape if the orientation is anti-clockwise, and assigning a second negative value greater than the first negative value to each mask element that is partly between two lines of the sub-shape if the orientation is clockwise.

In some embodiments, assigning a value to each mask element of the sub-mask may comprise, for each line of the sub-shape: determining on which side of a straight line between the vertices of the line, another vertex of the sub-shape is, and tagging a mask element with a true or false tag based on the determination of on which side the another vertex is. Assigning a value to each mask element of the sub-mask may also comprise assigning a first non-zero value to each mask element tagged with either only true tags or a false tag associated with a curved line of the sub-shape and a false tag associated with a straight line of the sub-shape, and assigning a value of zero to all other mask elements. Assigning a value to each mask element of the sub-mask may further comprise: tagging a mask element with a gradient tag if the mask element is on the straight line between the vertices of the line, for each line of the sub-shape, and assigning a second non-zero value, wherein the absolute value of the second non-zero value is less than the absolute value of the first non-zero value, to each mask element tagged with at least one gradient tag.

In some embodiments, the shape may be filled based on the accumulated values of the mask.

A second aspect of the invention is a computer program product comprising a computer readable medium, having thereon a computer program comprising program instructions, the computer program being loadable into a data-processing unit and adapted to cause the data-processing unit to execute method steps according to the first aspect of the invention when the computer program is run by the data-processing unit.

A third aspect of the invention is an arrangement for filling a shape having a boundary with at least one curved line. The arrangement comprises tessellation circuitry adapted to divide the shape into a plurality of sub-shapes, each comprising at least first, second and third vertices, wherein at least the first and second vertices of a sub-shape are points of the boundary of the shape and wherein the first and second vertices of a sub-shape are determined as a first and second extremity point of a line of the boundary if the line is a straight line. The arrangement also comprises rasterizing circuitry adapted to create a mask comprising mask elements and associated with the shape based on the plurality of sub-shapes, and painting circuitry adapted to fill the shape based on the mask. The tessellation circuitry is further adapted to determine, for each of the at least one curved lines, if it comprises at least one point having either a horizontal or a vertical tangent. If the curved line does not comprise at least one point having either a horizontal or a vertical tangent, the tessellation circuitry is adapted to determine the first and second vertices of a sub-shape as a first and second extremity point of the curved line. If the curved line comprises at least one point having either a horizontal or a vertical tangent, the tessellation circuitry is adapted to determine at least one of the first and second vertices of a sub-shape as one of the at least one points having either a horizontal or a vertical tangent.

In some embodiments, the tessellation circuitry may be further adapted to, if the curved line comprises at least one point having either a horizontal or a vertical tangent, determine the first and second vertices of a sub-shape as: two adjacent points having either a horizontal or a vertical tangent, or an extremity point of the curved line and an adjacent point having either a horizontal or a vertical tangent.

In some embodiments, the tessellation circuitry may be adapted to differentiate the curved line to determine, for each of the at least one curved lines, if it comprises at least one point having either a horizontal or a vertical tangent.

In some embodiments, the rasterizing circuitry may be adapted to, for each sub-shape: determine a bounding box based on at least the first, second and third vertices, and use the bounding box to create a sub-mask associated with the sub-shape by assigning a value to each mask element of the sub-mask. The rasterizing circuitry may be further adapted to accumulate the values of each of the sub-masks to create the mask associated with the shape.

In some embodiments, the rasterizing circuitry may be adapted to determine an orientation of the sub-shape for each sub-shape and assigning the value based on the orientation.

In some embodiments, the rasterizing circuitry may be further adapted to, for each line of the sub-shape: determine on which side of a straight line between the vertices of the line, another vertex of the sub-shape is, and tag a mask element with a true or false tag based on the determination of on which side the another vertex is. The rasterizing circuitry may be further adapted to assign a first non-zero value to each mask element tagged with either only true tags or a false tag associated with a curved line of the sub-shape and a false tag associated with a straight line of the sub-shape, and to assign a value of zero to all other mask elements.

In some embodiments, the painting circuitry may be adapted to fill the shape based on the accumulated values of the mask.

In some embodiments, the arrangement according to the third aspect of the invention may further comprise a graphical interface, and application storage and processing means.

A fourth aspect of the invention is an electronic device comprising the arrangement according to the fifth aspect of the invention.

One of the advantages of embodiments of the invention is that the amount of segmentation needed when filling shapes defined by an, at least partly, curved boundary is reduced.

Another advantage of embodiments of the invention is that less effort in the transformation stage is needed.

Another advantage of embodiments of the invention is that less traffic between the transformation stage and the rasterization stage is generated.

Another advantage of embodiments of the invention is straightforward implementation.

Another advantage of embodiments of the invention is that, since the number of sub-shapes is reduced, the overall computational effort is reduced.

Another advantage of embodiments of the invention is that the cost (in silicon area) of adding 2D-functionality to a 3D-rasterization unit in hardware (e.g. ASIC) is small since the same basic drawing primitive is used (e.g. triangles).

Another advantage of embodiments of the invention is that the effort of converting shapes comprising at least one curved line to hardware-friendly sub-shapes is straightforward and does not require any significant effort

Another advantage of embodiments of the invention is that the performance of the rasterization unit does not degrade significantly when filling sub-shapes comprising a curved line compared to when filling sub-shapes comprising only straight lines.

Another advantage of embodiments of the invention is that the visual quality of a curved shape is provided that is higher than what is achieved by the linearization method.

Another advantage of embodiments of the invention is that sub-shapes are provided such that a bounding box may be fully defined for each sub-shape by the vertices of the sub-shape.

### Brief Description of the Drawings

Further objects, features and advantages of the invention will appear from the following detailed description of embodiments of the invention, with reference being made to the accompanying drawings, in which:
Fig. 1 is a schematic illustration of an example shape filled by the scan line fill method;
Fig. 2 is a schematic illustration showing an example segmentation of a shape boundary comprising curved lines;
Fig. 3 is a schematic illustration showing an example segmentation of a shape boundary comprising curved lines according to some embodiments of the invention;
Fig. 4 is a flow diagram illustrating example method steps according to some embodiments of the invention;
Fig. 5 is a flow diagram illustrating example method steps according to some embodiments of the invention;
Fig. 6 is a flow diagram illustrating example method steps according to some embodiments of the invention;
Fig. 7 is a schematic illustration of example complex shapes that may be filled according to some embodiments of the invention;
Fig. 8 is a flow diagram illustrating example method steps according to some embodiments of the invention;
Fig. 9 is a schematic illustration of edge functions according to some embodiments of the invention;
Fig. 10 is a flow diagram illustrating example method steps according to some embodiments of the invention;
Fig. 11 is a schematic illustration of sub-shape orientation according to some embodiments of the invention;
Fig. 12 is a schematic illustration of sub-shape orientation according to some embodiments of the invention;
Figs. 13A and B are block diagrams illustrating image rendering pipe-lines according to some embodiments of the invention; and
Fig. 14 is a schematic illustration of an example device that may comprise arrangements according to some embodiments of the invention.

### Detailed Description

In the following, embodiments of the invention will be described in which a shape of a graphical interface is filled. In particular, embodiments will be described which are suitable for filling shapes defined by a boundary that comprises at least one curved line. Embodiments of the invention provides for shape filling where less sub-shapes need to be created without compromising the filling precision. Embodiments of the invention also provide for ways of handling problematic sub-shapes so that they may be appropriately filled. Some embodiments of the invention use a modified 3D rasterization pipe-line to fill complex shapes in an efficient manner.

In some embodiments of the invention, the problems with complex shapes and the problems with small shapes (as described above) are solved. This may be achieved without increasing the segmentation resolution by using "polygons" (sub-shapes) where one edge is not a straight line. A curved line comprised in the boundary of a shape may be divided into segments (arcs) such that each segment does not loop back either in horizontal direction or vertical direction. In some embodiments, this is achieved by letting all points of a curved line that have a horizontal or vertical tangent be starting and ending points of respective arcs. Thus, in some embodiments, a sub-shape will be limited by two straight lines and one arc.

Applying these principles ensures that the sub-shape is limited by two (and only two) separate edges at each scan line. This facilitates the filling of a scan line, since filling a scan line that is bounded by, for example, a "hill-shaped" edge may be cumbersome.

Figure 3 illustrates the result of this approach when used on the shape of Figure 2 that comprises a straight line 201 and three curved lines 202, 203, 204. In Figure 3, the shape has been divided into 11 sub-shapes 305 each comprising two straight lines and one arc (or a third straight line). The arc starting and ending points are either an extremity point of a boundary line 306 or a point having a vertical or horizontal tangent 307, 308. It is apparent from comparing Figure 3 with Figure 2 that the number of sub-shapes needed to fill the shape may be markedly reduced for complex shapes. According to embodiments of the invention, the visual quality of a rasterization of the sub-shapes in Figure 3 is higher than the visual quality of a rasterization of the sub-shapes in Figure 2.

In some embodiments of the invention, a 3D-engine is used for drawing 2D-graphics. More specifically, the triangle-tessellation and associated operations commonly used in 3D-engines are used to fill 2D-shapes. A common operation of a 3D-engine is to draw triangles that have three straight edges. In order to fill a 2D-shape using this approach, the shape is thus split up into triangles that together fill the interior of the shape. Traditionally, the boundary line is split up in straight lines that make up an approximation of the original boundary line as mentioned above. According to some embodiments, the 3D-engine is modified to support triangles with one curved edge (where the curved edge satisfies the conditions of the arcs as explained above). When such a 3D-engine is used, the tessellation process is simplified, and the number of sub-shapes needed is reduced.

A shape may be defined by the path of its boundary line, and the path can be made up by several segments as illustrated in Figures 2 and 3. A shape can be filled by drawing a number of triangles as illustrated in Figure 2, where each triangle is made up of two points on the boundary line and an arbitrary point, e.g. a centre point. Each polygon may be filled at a time.

In some approaches, only pixels that are close to the sub-shape (polygon, triangle) are included in the evaluation process that determines which pixels should be drawn and which pixels should not. This may speed up the process. In such approaches, a bounding box is therefore defined for each sub-shape to reduce the amount of pixels that are evaluated. Commonly, the corners (vertices) of the sub-shape are used to determine the bounding box, i.e. calculate the minimum and maximum pixel coordinates that define the bounding box. The effort to calculate the bounding box of a sub-shape with one curved edge is, however, significantly higher than for triangles with straight edges. All points on the curved edge may have to be evaluated. By segmenting the boundary using the constraints as explained above in connection to Figure 3, the bounding box calculation may be kept simple. The vertices of the sub-shapes may be used to determine the bounding box in the same manner as for triangles.

As will be explained later, the evaluation of each pixel may also be complex for complex shapes (e.g. shapes that are not convex), and this evaluation process may also be simplified when the boundary segmentation according to embodiments of the invention is used.

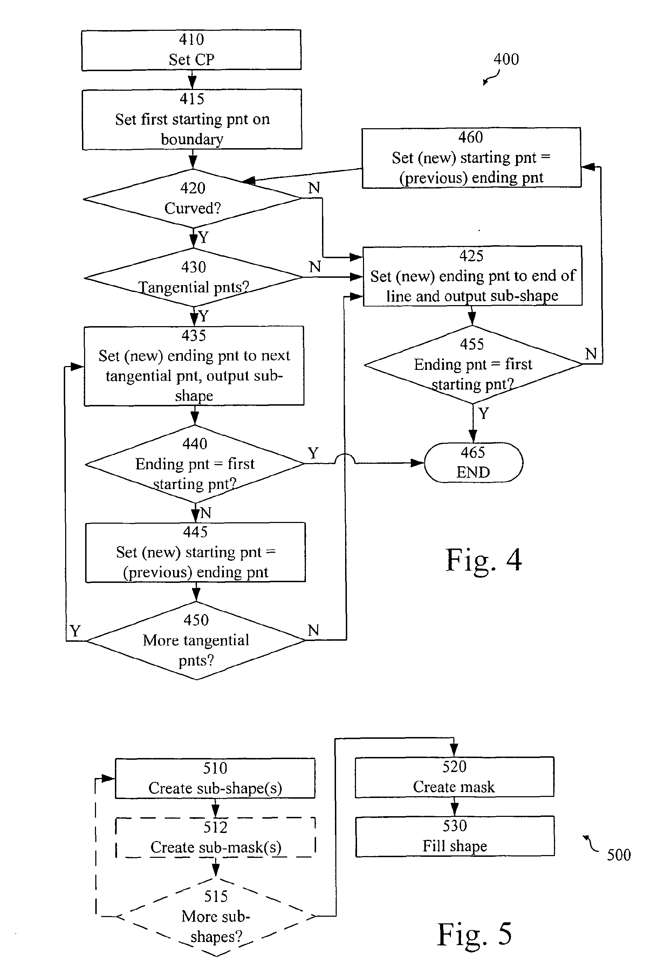

Turning to Figure 4, embodiments of the invention will now be described where sub-shaped are defined, for example, as illustrated by Figure 3. Figure 4 illustrates an example method 400 of embodiments of the invention. The method 400 describes how the boundary of the shape may be segmented and how the shape may be divided into sub-shapes. Using the method 400 results in sub-shapes that are easy to rasterize.

The method 400 starts in step 410 where a point (denoted the centre point, CP) is defined. This CP is used as a vertex for all the sub-shapes, while the other two vertices of each sub-shape may differ between different sub-shapes. The method will work regardless of where the CP is located (although performance may differ depending on the location). Thus, the CP may be defined as a point inside or outside the shape or even as a point on the boundary of the shape. The CP may even be identical to any of the starting or ending point as defined below.

In step 415 a point of the boundary of the shape (e.g. the first point in the path) is used as a first starting point. The point of the boundary may be an extremity point of a boundary line, such as point 306 in Figure 3.

Next, in step 420, it is determined whether the first boundary line of the path is a curved line.

If it is a straight line (NO-path out of step 420), the process continues to step 425. There, the farther extremity point of the boundary line is set as ending point and a sub-shape is defined as a straight line between the CP and the starting point, a straight line between the CP and the ending point, and the boundary line between the starting point and the ending point.

If the imminent boundary line of the path is a curved line (YES-path out of step 420), the process continues to step 430. There, it is determined if the curved line comprises any points having a vertical or horizontal tangent. (The starting point may be excluded from this determination step. This may be useful if, for example, the starting point has a vertical or horizontal tangent.) In some embodiments, this step comprises differentiating the curved line function and evaluating the result. In particular, the points where the derivative is zero may be identified as points having a vertical or horizontal tangent. In some embodiments, this step comprises traversing the curved line and evaluating the tangents.

If the curved line does not comprise any such points (NO-path out of step 430), the process continues to step 425, where an ending point and a sub-shape are defined as described above.

If the curved line comprises one or more such points (YES-path out of step 430), the process continues to step 435. There, the first upcoming point of the boundary line having a vertical or horizontal tangent is set as ending point and a sub-shape is defined as a straight line between the CP and the starting point, a straight line between the CP and the ending point, and the boundary line between the starting point and the ending point.

In step 440, it is determined whether the ending point is equal to the first starting point, i.e. if the entire boundary path has been processed. If that is the case (YES-path out of step 440), the process ends in step 465. If not (NO-path out of step 440), the process continues to step 445, where a new starting point is set as the ending point used in step 435.

In step 450, it is determined if there are more points on the curved line having a vertical or horizontal tangent. If there are more such points on the line (YES-path out of step 450), then the process returns to step 435, where an ending point and a sub-shape are defined as described above. If, however, there are no more such points on the line (NO-path out of step 450), then the process proceeds to step 425, where an ending point and a sub-shape are defined as described above.

When an ending point and a sub-shape have been defined in step 425 (regardless of whether the process entered step 425 from step 420, 430 or 450), it is determined, in step 455, whether the ending point is equal to the first starting point, i.e. if the entire boundary path has been processed. If that is the case (YES-path out of step 455), the process ends in step 465. If not (NO-path out of step 455), the process continues to step 460, where a new starting point is set as the ending point used in step 425, and the process returns to step 420 to process the upcoming boundary line of the path.

A typical method to paint (fill) a shape is to first create a mask. Embodiments of the invention will now be described where a mask is created and used to fill a shape. Each pixel in the mask is assigned a non-zero value if it is inside the shape and a value of zero if it is outside the shape. The mask is then used during the paint operation to discard all pixels that are not to be drawn. The assigned values (and thus the mask) can be either binary or non-binary. The non-binary format may, for example, be used for anti-aliasing, where a pixel that is partly covered by the shape can be partly painted. Figure 5 illustrates an example method 500 according to some embodiments of the invention. In step 510 at least one sub-shape is created. Step 510 may, for example, comprise one or more of the method steps as described in connection to Figure 4. In step 520, a mask is created, and in step 530, the mask is used to fill the shape.

In some embodiments, all the sub-shapes of a shape are created in step 510 before proceeding to step 520. In other embodiments, the process proceeds to optional step 512 for each single sub-shape that is created in step 510 (compare with steps 425 and 435 of Figure 4), and a sub-mask is created for that single sub-shape. If more sub-shapes are to be created (optional step 515) then steps 510 and 512 are iterated. When all sub-shapes and sub-masks have been created the mask may be created in step 520 as a superposition of the sub-masks. Thus, each sub-shape may be rasterized before defining a new one or all sub-shapes may be created first and then rasterized. Each sub-shape may be rasterized individually.

The creation of the sub-masks (step 512) may be done directly in a global mask i.e. by super-positioning of the sub-masks (often done on the fly by modifying the global mask). Thus, in such embodiments, step 512 comprises both sub-mask creation and (global) mask creation and step 520 is superfluous.

In some embodiments, all sub-shapes are created (step 510) and stored in a list. Then the mask is created (step 520) by traversing the list. Finally the shape is filled (step 530) according to the mask.

In some embodiments, one sub-shape is created and the mask is drawn accordingly. Then the next sub-shape is created and the mask is updated accordingly. These steps are repeated until all the sub-shapes have been created and the mask has been updated accordingly. Then the shape is filled. Thus, in such embodiments, a step corresponding to 510 will be followed by a step corresponding to 520 (where a mask is created by updating for each sub-shape), which will be followed by a step corresponding to 515. If there are more sub-shapes to be determined, the process returns to the step corresponding to 510. If there are no more sub-shapes to be determined, the process proceeds to the step corresponding to 530.

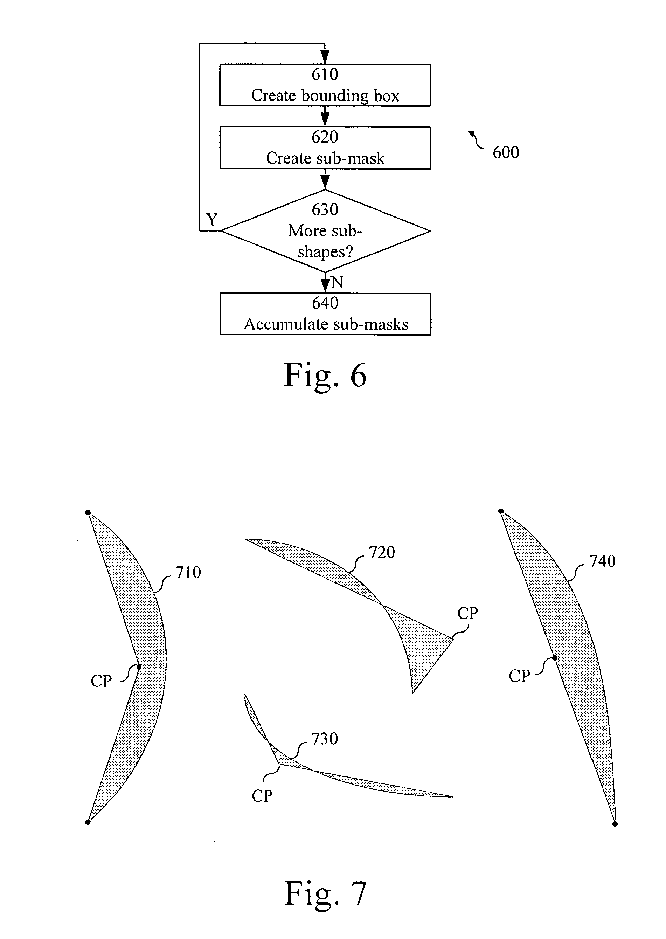

Figure 6 illustrates an example method 600 for creating a mask according to some embodiments of the invention. In step 610, a bounding box is defined for a sub-shape. This may be done according to the teachings explained above. In step 620, a sub-mask associated with the sub-shape is created based on the bounding box. This procedure is iterated for each sub-shape (step 630). When all sub-masks have been created, the mask (for the entire shape) is created in step 640 by superpositioning the sub-masks.

The method 600 may, for example, be comprised in step 520 of Figure 5. In some embodiments, steps 610 and 620 are performed in sequence after steps 425 and 435 of Figure 4, and step 640 is comprised in step 520 of Figure 5.

One way to create a sub-mask is by assigning a positive or negative value to each mask element depending on the orientation of the sub-shape edges. Then, when the mask is created by superpositioning the sub-masks, this translates to adding, for each mask element, the assigned positive or negative values for all the sub-masks. When anti-aliasing is activated, the assigned value may be the coverage value (e.g. one or a fraction of one, positive or negative). In some cases, the coverage value may be more than one. This happens, for example, when a pentagram is drawn, since the central area of the mask is then updated twice (i.e. the edge of a pentagram fulfills two laps around the centre point). In such cases, the assigned value is recalculated (e.g. by a limiting function) such that it is between minus one and plus one (the range including minus one and plus one).

The orientation may be either clockwise (CW) or anti-clockwise (ACW). A sub-shape is defined as having an anti-clockwise orientation if the path "CP - starting point - ending point - CP" describes an anti-clockwise motion, and vice versa.

The orientation approach to sub-mask creation enables proper filling. It may be particularly useful when non-convex shapes are to be filled. The approach also removes the necessity of placing the centre point inside the shape.

It does not matter if the rule is to assign positive values for CW sub-shapes and negative values for ACW sub-shapes or vice versa, as long as the same rule is followed for all sub-shapes of a shape. After superpositioning, the absolute value of each mask element in the mask may be used to determine the coverage value for each pixel. In the following examples, the rule of assigning a positive value for ACW sub-shapes and a negative value for CW sub-shapes is applied.

In some embodiments, the orientation may be determined for each sub-shape by taking the cross product between the vector from the CP to the starting point and the vector from the CP to the ending point. Hence, implementation of the orientation procedure is straightforward.

The orientation approach may be more complicated when drawing sub-shapes having one curved line. There are at least three situations, illustrated in Figure 7, where the orientation is not correctly determined if the above cross product procedure is applied, namely:
- When the curved line passes "outside" the CP, 710;
- When the curved line crosses at least one of the straight lines, 720, 730; and
- When the straight lines are aligned i.e. the angle between them is 180 degrees, 740.

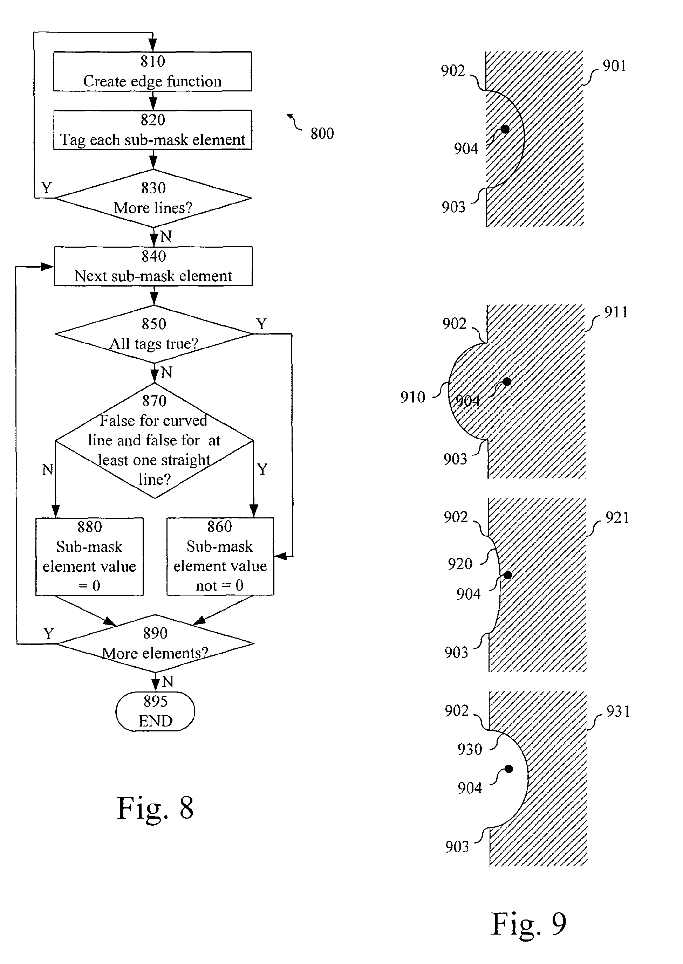

One example way to determine which pixels are inside a sub-shape and which are not is illustrated by the method 800 in Figure 8. The method 800 may, for example, be comprised in step 620 in Figure 6, and may be seen as an alternative or a complement to the orientation by cross product approach.

In step 810 an edge function is created for a line of the sub-shape. For a straight line, the edge function is true for all pixels that are located in the half-plane delimited by the line and comprising the opposing vertex, and false for all other pixels. For a curved line the edge function is more complicated, see Figure 9. First define the half-plane 901 delimited by a straight line between the extremity points 902, 903 of the curved line and comprising the opposing vertex (CP) 904. If the curved line 910 bulges from this half-plane, the edge function is true for all pixels in the union of the half-plane and a convex shape defined by the curved line, i.e. all pixels in the area 911. If the curved line 920, 930 bulges towards the half-plane, the edge function is true for all pixels in the intersection of the half-plane and a convex shape defined by the curved line, i.e. all pixels in the areas 921, 931. The edge function is false for all pixels where it is not true.

Returning to Figure 8, each pixel is tagged, in step 820, with the true or false value as defined above, and the process is iterated for each line of the shape (step 830). One way of doing this is to iterate the three edge functions for each pixel (element) before going to the next pixel. In such embodiments, a bounding box may first be defined. The bounding box may be tight with regard to the vertices. For example, no lines above the uppermost vertex and no lines below the lowermost vertex may be included in the bounding box. Then, an element in the bounding box may be picked and the three edge functions may be evaluated for that element. In the evaluation, an element is thus tagged with all three edge functions before progressing to the next pixel.

The bounding box associated with the sub-shape may be determined before step 810.

When all pixels have been tagged for all lines of the sub-shape, the bounding box area is traversed (e.g. by scan lines) and the tags are evaluated for each pixel.

In step 840, a pixel to be evaluated is chosen. If all edge functions are true for the pixel (step 850), then the pixel is determined to belong to the interior of the sub-shape and should be painted. Thus, a non-zero value is assigned to the pixel in step 860.

However, this condition will not suffice for problematic sub-shapes, such as those described in connection to Figure 7. For some of those sub-shapes 710, 740, no pixels will have all true tags. For others of those sub-shapes 720, 730, only some of the pixels in the interior of the shape will have all true tags. Therefore, another condition may be added.

Thus, if a pixel has a false tag associated with the curved line and at least one of the tags associated with the straight lines is also false (step 870), then the pixel is determined to belong to the interior of the sub-shape and a non-zero value is assigned to the pixel in step 860. In this case, the non-zero value should be of opposite sign compared to the pixels having all true tags. This is because the orientation of the part of the sub-shape that encloses this pixel is opposite to the orientation of the part of the sub-shape that encloses a pixel as in step 850.

Otherwise, a value of zero is assigned to the pixel in step 880. The process is iterated for all pixels in the bounding box (step 890), and then the process ends in step 895.

The method step 870 enables correct sub-mask creation for the sub-shapes 710, 720, 730. Sub-shape 740, however, will have an erroneous sub-mask since the edge functions of the straight lines cannot be determined.

It is noted that the operations of method 800 have been described in terms of assigning sub-mask values to pixels. However, the same principles may be applied if a sub-mask is built up by sub-mask elements other than pixels (such as groups of pixels or other image elements).

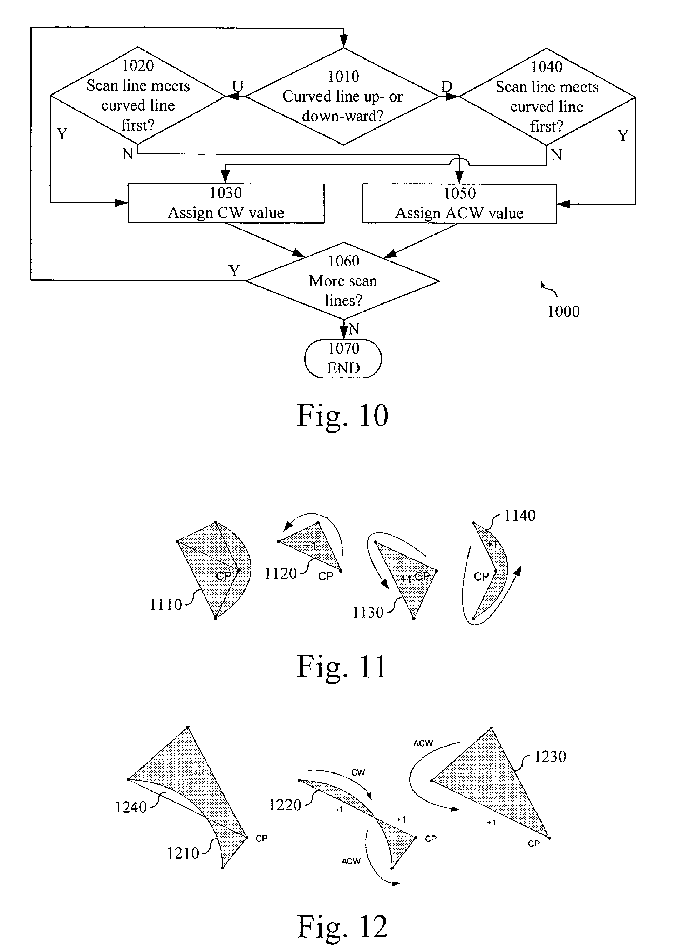

An alternative way to determine which pixels are inside a sub-shape and which are not is illustrated by the method 1000 in Figure 10. The method 1000 may, for example, be comprised in step 620 in Figure 6, and may be seen as an extension to the orientation by cross product approach. The method 1000 enables correct sub-mask creation for all the problematic sub-shapes 710, 720, 730, 740 in Figure 7. Method 1000 may be used for all scan lines that crosses the curved edge. In some embodiments, it may not be used for scan lines that are limited by the two straight lines. For each sub-shape and each scan line, method 1000 starts in step 1010, where it is determined whether the line from the starting point to the ending point is drawn upwards or downwards.

If the line is drawn upwards and the scan line meets this line before it meets another line of the sub-shape (YES-path out of step 1020), then the orientation of the sub-shape is clockwise for this scan line and values are assigned to all pixels of the scan line accordingly in step 1030.

If the line is drawn upwards and the scan line meets this line after it meets another line of the sub-shape (NO-path out of step 1020), then the orientation of the sub-shape is anti-clockwise for this scan line and values are assigned to all pixels of the scan line accordingly in step 1050.

If the line is drawn downwards and the scan line meets this line before it meets another line of the sub-shape (YES-path out of step 1040), then the orientation of the sub-shape is anti-clockwise for this scan line and values are assigned to all pixels of the scan line accordingly in step 1050.

Finally, if the line is drawn downwards and the scan line meets this line after it meets another line of the sub-shape (NO-path out of step 1040), then the orientation of the sub-shape is clockwise for this scan line and values are assigned to all pixels of the scan line accordingly in step 1030.

The process is repeated for all scan lines in a bounding box (step 1060) that are bounded by the curved edge, and then the process ends in step 1070.

Figures 11 and 12 illustrate the result of the orientation method (for example, as described in connection to Figure 10) for a simple shape 1110 and a complex shape 1210. Each of the shapes is tessellated into sub-shapes 1120, 1130, 1140, 1220, 1230 and the values written in connection to the sub-shapes represent the sub-mask value (a binary mask is assumed). It may be noted that the two sub-shapes 1220, 1230 both contribute to the mask in the area 1240, the respective sub-mask values being -1 and +1 resulting in a mask value of zero. It may also be noted that the sub-mask 1220 has one part with sub-mask value -1 and one part with sub-mask value +1. This is due to the fact that the sub-mask value may be determined per scan line (and not per sub-mask) according to some embodiments of the invention.

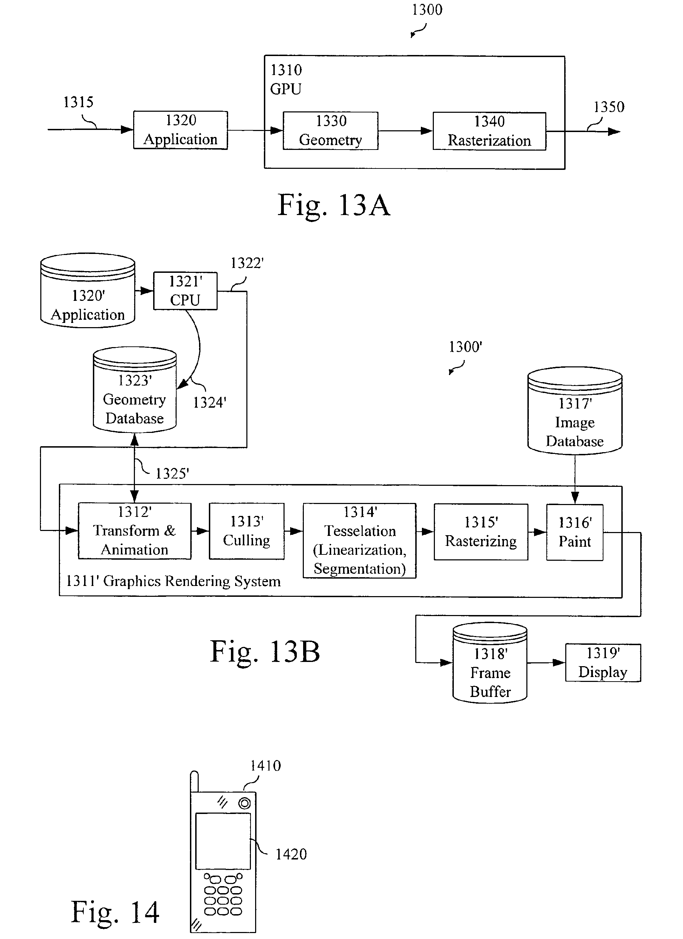

Figure 13A shows a block diagram of example arrangement 1300 according to some embodiments of the invention. The arrangement 1300 may, for example, be adapted to perform method steps as described in connection to Figures 4-6, 8 and 10. The arrangement 1300 may comprise a modified 3D-engine image rendering pipe-line. The modification may, for example, comprise support for handling "triangles" having one curved line (or arc).

The arrangement 1300 comprises a graphics processing unit (GPU) 1310 and an application block 1320, together forming an image rendering pipe-line.

The application block 1320 may generate a geometry database. The application block 1320 may also generate drawing commands. The application block 1320 generates image data (e.g. by reading from storage at 1315). These three components may be sent from the application block 1320 to the GPU 1310, which may perform various operations on the image. For example, a geometry block 1330, comprised in the GPU 1310, may tessellate the image. The geometry block may, for example, use the tessellation approach described in connection to Figures 3 and 4. The tessellated image is subsequently input to a rasterizing block 1340, also comprised in the GPU 1310. The geometry block 1330 may perform various further operations on the tessellated image before outputting it to the rasterizing block 1340. For example, the geometry block 1330 may perform cutting operations on the tessellated image. The image thus processed is then input to the rasterizing block 1340. The rasterizing block 1340 transforms the vector representation of the image to pixels. The rasterizing block 1340 may, for example create masks and fill shapes according to methods that have been described previously (for example, in connection to Figures 6, 8 and 10), and outputs the image ready for rendering (for example on a graphical interface such as a display) at 1350.

Figure 13B shows a block diagram of another example arrangement 1300' according to some embodiments of the invention. The arrangement 1300' may, for example, be adapted to perform method steps as described in connection to Figures 4-6, 8 and 10. As with the arrangement 1300, the arrangement 1300' may comprise a modified 3D-engine image rendering pipe-line. The modification may, for example, comprise support for handling "triangles" having one curved line (or arc).

The arrangement 1300' comprises an application storage 1320', a CPU (Central Processing Unit) 1321', a graphics rendering system 1311', a geometry database 1323', an image database 1317', a frame buffer 1318' and a display 1319'.

The application storage 1320' is a storage that may comprise one or more graphical interface programs, such as a game, MMI, etc. In operation, the CPU 1321' may execute one (or more) of the graphical interface programs. In such execution, a first stage may be to setup (initialize) the geometry database 1323' as illustrated at 1324'. The geometry database 1323' comprise geometrical objects (such as shapes) and their relative placement and orientation. In a next stage commands and parameters may be issued to the graphics rendering system 1311' as illustrated at 1322'. In some embodiments, the commands and parameters may be influenced by input from a user or by predefined behaviour.

The graphics rendering system 1311' comprises a transform and animation stage 1312' (which may, in fact, be implemented as a single or two consecutive stages), a culling stage 1313', a tessellation stage 1314', a rasterizing stage 1315' and a paint stage 1316'.

Operations of the animation stage comprise animations of objects (e.g. deformations) and scene animation (e.g. changing the relative placement and orientation of the objects). Operations of the transform stage comprises alignment of the objects with a viewer (eye) i.e. all objects are mapped to the visible display area. During operation, the transform and animation stage 1312' utilizes and manipulates content of the geometry database 1323' as illustrated at 1325'.

In operation, the culling stage performs culling, which is the process where shapes that are not visible to the viewer are discarded.

The tessellation stage 1314' is operable to split up complex shapes into simple shapes. Curved lines may be either linearized, or split up into sub-curves in accordance with any of the methods that have been previously described.

In operation, the rasterizing stage 1315' generates a mask in accordance with any of the methods that have been previously described. The paint stage 1316' is operable to apply paint (e.g. colour) to the part of the drawing surface that is covered by the shape i.e. where the mask is non-zero. In some embodiments, the rasterizing process stage 1315' and the paint stage 1316' are implemented within the same component. The image database 1317' comprises images (patterns) that may be used to fill the shape. The image database 1317' may typically be initialized by the CPU (i.e. by the program), and then used as input to the paint stage 1316'. Alternatively or additionally, the image database 1317' may be the target for the process of the paint stage 1316'.

The output (image data) of the paint stage 1316' may be stored in the frame buffer 1318' until all shapes are drawn. Then, the content of the frame buffer 1318' may be sent to the display 1320'.

The described embodiments of the invention and their equivalents may be realised in software or hardware or a combination thereof. They may be performed by general-purpose circuits associated with or integral to a communication device, such as digital signal processors (DSP), central processing units (CPU), co-processor units, graphics processing units (GPU), or by specialized circuits such as for example application-specific integrated circuits (ASIC) or system on chip (SoC). All such forms are contemplated to be within the scope of the invention as claimed.

The invention may be embodied within an electronic apparatus comprising circuitry/logic/arrangements or performing methods according to any of the embodiments of the invention. The electronic apparatus may, for example, be a portable or handheld mobile radio communication equipment, a mobile radio terminal, a mobile telephone, a communicator, an electronic organizer, a smartphone, a barcode scanner, a computer, or a mobile gaming device.

Figure 14 illustrates an example mobile terminal 1410 comprising image processing logic according to embodiments of the invention. The mobile terminal 1410 may be connected, through a radio link, to a base station site.

The mobile terminal 1410 is illustrated as a mobile telephone in a schematic front view. The mobile terminal 1410 may comprise a display 1420, a keypad, a loudspeaker, and a microphone, which together provides a man-machine interface for operating the mobile terminal 1410. The mobile terminal may further comprise an image-acquiring device, such as a camera.

According to some embodiments of the invention, a computer program product comprises a computer readable medium such as, for example, a diskette or a CD-ROM. The computer readable medium may have stored thereon a computer program comprising program instructions. The computer program may be loadable into a data-processing unit, which may, for example, be comprised in a mobile terminal. When loaded into the data-processing unit, the computer program may be stored in a memory associated with or integral to the data-processing unit. According to some embodiments, the computer program may, when loaded into and run by the data-processing unit, cause the data-processing unit to execute method steps according to, for example, the methods shown in any of the Figures 4-6, 8 and 10.

Embodiments of the invention may reduce the amount of segmentation that needs to be done when filling shapes with a boundary having curved lines. This may lead to less effort in the transformation stage located in 1330 of Figure 13A, and less traffic between the transformation stage 1330 and the rasterization stage 1340. The implementation of some embodiments of the invention is straightforward (see, for example, Figures 3 and 4). The effort to evaluate curved lines in the rasterization stage may for some embodiments be larger than the effort to evaluate only straight lines. However, since the number of sub-shapes may be reduced, the overall effort is less for some embodiments compared to an approach using only sub-shapes with straight lines (polygons).

The invention has been described herein with reference to various embodiments. However, a person skilled in the art would recognize numerous variations to the described embodiments that would still fall within the scope of the invention as limited by the appended claims. For example, the method embodiments described herein describes example methods through method steps being performed in a certain order. However, it is recognized that these sequences of events may take place in another order without departing from the scope of the invention as limited by the appended claims. Furthermore, some method steps may be performed in parallel even though they have been described as being performed in sequence.

In the same manner, it should be noted that in the description of embodiments of the invention, the partition of functional blocks into particular units is by no means limiting to the invention. Contrarily, these partitions are merely examples. Functional blocks described herein as one unit may be split into two or more units. In the same manner, functional blocks that are described herein as being implemented as two or more units may be implemented as a single unit without departing from the scope of the invention as limited by the appended claims.

Hence, it should be understood that the limitations of the described embodiments are merely for illustrative purpose and by no means limiting. Instead, the invention is construed to be limited by the appended claims.

## Claims

1. A method of filling a shape, suitable for use in a device having graphics processing capabilities, wherein the shape has a boundary with at least one curved line, comprising:
dividing (510) the shape into a plurality of sub-shapes, each comprising at least first, second and third vertices, wherein at least the first and second vertices of a sub-shape are points of the boundary of the shape, wherein the first and second vertices of a sub-shape are determined (425) as a first and second extremity point of a line of the boundary if the line is a straight line, and wherein the third vertex is identical for all of the plurality of sub-shapes;
creating (520) a mask comprising mask elements and associated with the shape based on the plurality of sub-shapes by determining (610), for each sub-shape, a bounding box based on at least the first, second and third vertices, and using (620) the bounding box to create a sub-mask associated with the sub-shape; and
using (530) the mask to fill the shape;
**characterized in**:
determining (430), for each of the at least one curved lines, if it comprises at least one point having either a horizontal or a vertical tangent;
if the curved line does not comprise at least one point having either a horizontal or a vertical tangent, determining (425) the first and second vertices of a sub-shape as a first and second extremity point of the curved line; and
if the curved line comprises at least one point having either a horizontal or a vertical tangent, determining (425, 435) at least one of the first and second vertices of a sub-shape as one of the at least one points having either a horizontal or a vertical tangent.

2. The method of claim 1, further comprising, if the curved line comprises at least one point having either a horizontal or a vertical tangent, determining the first and second vertices of a sub-shape as:
two adjacent points having either a horizontal or a vertical tangent; or
an extremity point of the curved line and an adjacent point having either a horizontal or a vertical tangent.

3. The method of any of claims 1 through 2, wherein the step of determining, for each of the at least one curved lines, if it comprises at least one point having either a horizontal or a vertical tangent comprises differentiating the curved line.

4. The method of any of claims 1 through 3, wherein the third vertex is determined (410) as:
an arbitrary point of an interior of the shape; or
an arbitrary point external to the shape; or
a point on the boundary of the shape.

5. The method of any of claims 1 through 4, wherein each sub-shape consists of the first, second and third vertices, a first straight line between the first and third vertices, a second straight line between the second and third vertices, and either a straight or a curved line between the first and second vertices.

6. The method of any of claims 1 through 5, wherein the step of creating a mask associated with the shape based on the plurality of sub-shapes comprises:
using (620), for each sub-shape, the bounding box to create said sub-mask associated with the sub-shape by assigning (860, 880, 1030, 1050) a value to each mask element of the sub-mask; and
accumulating (640) the values of each of the sub-masks to create the mask.

7. The method of claim 6, wherein the bounding box is determined as a minimum rectangle enclosing at least the first, second and third vertices, and wherein the step of using the bounding box to create a sub-mask comprises evaluating mask elements enclosed in the bounding box.

8. The method of any of claims 6 through 7, wherein the step of creating a mask associated with the shape based on the plurality of sub-shapes further comprises determining an orientation of the sub-shape for each sub-shape, and wherein the assigned value depends on the orientation.

9. The method of claim 8, wherein the step of determining the orientation of the sub-shape comprises:
determining (1010) if the line between the first and second vertices is drawn downwards or upwards;
determining (1020) if a scan line first encounters the line between the first and second vertices or another line of the sub-shape;
determining the orientation as clockwise (1030) if:
the line between the first and second vertices is drawn downwards and the scan line first encounters another line of the sub-shape; or
the line between the first and second vertices is drawn upwards and the scan line first encounters the line between the first and second vertices; and
determining the orientation as anti-clockwise (1050) otherwise.

10. The method of claim 9, wherein the sub-shape has a first orientation associated with a first scan line and a second orientation associated with a second scan line, the first orientation being different from the second orientation.

11. The method of any of claims 9 though 10, wherein assigning a value to each mask element of the sub-mask comprises, for each scan line:
assigning a value of zero to each mask element that is not between two lines of the sub-shape;
assigning a first positive value to each mask element that is between two lines of the sub-shape if the orientation is anti-clockwise; and
assigning a first negative value to each mask element that is between two lines of the sub-shape if the orientation is clockwise.

12. The method of claim 11, wherein assigning a value to each mask element of the sub-mask further comprises:
assigning a second positive value less than the first positive value to each mask element that is partly between two lines of the sub-shape if the orientation is anti-clockwise; and
assigning a second negative value greater than the first negative value to each mask element that is partly between two lines of the sub-shape if the orientation is clockwise.

13. The method of any of claims 6 though 7, wherein assigning a value to each mask element of the sub-mask comprises:
for each line of the sub-shape:
determining (810) on which side of a straight line between the vertices of the line, another vertex of the sub-shape is; and
tagging (820) a mask element with a true or false tag based on the determination of on which side the another vertex is;
assigning (860) a first non-zero value to each mask element tagged with either:
only true tags (850); or
a false tag associated with a curved line of the sub-shape and a false tag associated with a straight line of the sub-shape (870); and
assigning (880) a value of zero to all other mask elements.

14. The method of claim 13, wherein assigning a value to each mask element of the sub-mask further comprises:
for each line of the sub-shape:
tagging (820) a mask element with a gradient tag if the mask element is on the straight line between the vertices of the line; and
assigning (860) a second non-zero value, wherein the absolute value of the second non-zero value is less than the absolute value of the first non-zero value, to each mask element tagged with at least one gradient tag.

15. The method of any of claims 6 through 14, wherein the shape is filled based on the accumulated values of the mask.

16. A computer program product comprising a computer readable medium, having thereon a computer program comprising program instructions, the computer program being loadable into a data-processing unit and adapted to cause the data-processing unit to execute method steps according to any of claims 1 to 15 when the computer program is run by the data-processing unit.

17. An arrangement for filling a shape having a boundary with at least one curved line, comprising:
tessellation circuitry (1330, 1314') adapted to divide the shape into a plurality of sub-shapes, each comprising at least first, second and third vertices, wherein at least the first and second vertices of a sub-shape are points of the boundary of the shape, wherein the first and second vertices of a sub-shape are determined as a first and second extremity point of a line of the boundary if the line is a straight line, and wherein the third vertex is identical for all of the plurality of sub-shapes;
rasterizing circuitry (1340, 1315') adapted to create a mask comprising mask elements and associated with the shape based on the plurality of sub-shapes by determining, for each sub-shape, a bounding box based on at least the first, second and third vertices, and using the bounding box to create a sub-mask associated with the sub-shape; and
painting circuitry (1340, 1316') adapted to fill the shape based on the mask;
**characterized in that**:
the tessellation circuitry (1330, 1314') is further adapted to:
determine, for each of the at least one curved lines, if it comprises at least one point having either a horizontal or a vertical tangent;
if the curved line does not comprise at least one point having either a horizontal or a vertical tangent, determine the first and second vertices of a sub-shape as a first and second extremity point of the curved line; and
if the curved line comprises at least one point having either a horizontal or a vertical tangent, determine at least one of the first and second vertices of a sub-shape as one of the at least one points having either a horizontal or a vertical tangent.

18. The arrangement of claim 17, wherein the tessellation circuitry (1330, 1314') is further adapted to, if the curved line comprises at least one point having either a horizontal or a vertical tangent, determine the first and second vertices of a sub-shape as:
two adjacent points having either a horizontal or a vertical tangent; or
an extremity point of the curved line and an adjacent point having either a horizontal or a vertical tangent.

19. The arrangement of any of claims 17 through 18, wherein the tessellation circuitry (1330, 1314') is adapted to differentiate the curved line to determine, for each of the at least one curved lines, if it comprises at least one point having either a horizontal or a vertical tangent.

20. The arrangement of any of claims 17 through 19, wherein the rasterizing circuitry (1340, 1315') is adapted to:
use, for each sub-shape, the bounding box to create said sub-mask associated with the sub-shape by assigning a value to each mask element of the sub-mask; and
accumulate the values of each of the sub-masks to create the mask associated with the shape.

21. The arrangement of claim 20, wherein the rasterizing circuitry (1340, 1315') is adapted to determine an orientation of the sub-shape for each sub-shape, and assigning the value based on the orientation.

22. The arrangement of claim 20, wherein the rasterizing circuitry (1340, 1315') is further adapted to, for each line of the sub-shape:
determine on which side of a straight line between the vertices of the line, another vertex of the sub-shape is; and
tag a mask element with a true or false tag based on the determination of on which side the another vertex is;
assign a first non-zero value to each mask element tagged with either:
only true tags; or
a false tag associated with a curved line of the sub-shape and a false tag associated with a straight line of the sub-shape; and
assign a value of zero to all other mask elements.

23. The arrangement of any of claims 20 through 22, wherein the painting circuitry (1340, 1316') is adapted to fill the shape based on the accumulated values of the mask.

24. The arrangement of any of claims 17 through 23 further comprising:
a graphical interface (1319', 1420); and
application storage and processing means (1320, 1320', 1321').

## Patentansprüche

1. Verfahren zum Füllen einer Form, das zur Verwendung in einer Vorrichtung mit Grafikverarbeitungsfähigkeiten geeignet, wobei die Form eine Umrandung mit mindestens einer gekrümmten Linie hat, umfassend:
Teilen (510) der Form in eine Mehrzahl von Teilformen, welche jeweils mindestens erste, zweite und dritte Eckpunkte umfassen, wobei wenigstens die die ersten und zweiten Eckpunkte einer TeilformPunkte der Umrandung der Form sind, wobei die ersten und zweiten Eckpunkte einer Teilform als ein erster und zweiter Endpunkt einer Linie der Umrandung bestimmt werden (425), wenn die Linie eine gerade Linie ist, und wobei der dritte Eckpunkt für alle der Mehrzahl von Teilformen identisch ist;
Erzeugen (520) einer Maske, die Maskenelemente umfasst und mit der Form assoziiert ist, die auf der Mehrzahl von Teilformen basiert, durch Bestimmen (610) für jede Teilform eines Begrenzungsfelds, das auf mindestens den ersten, zweiten und dritten Eckpunkten basiert, und Verwenden (620) des Begrenzungsfelds zum Erzeugen einer Teilmaske, die mit der Teilform assoziiert ist; und
Verwenden (530) der Maske zum Füllen der Form;
**gekennzeichnet durch**:
Bestimmen (430) für jede der mindestens einen gekrümmten Linie, ob sie mindestens einen Punkt umfasst, der entweder eine horizontale oder eine vertikale Tangente aufweist;
Bestimmen (425), wenn die gekrümmte Linie nicht mindestens einen Punkt umfasst, der entweder eine horizontale oder eine vertikale Tangente aufweist, der ersten und zweiten Eckpunkte einer Teilform als einen ersten und zweiten Endpunkt der gekrümmten Linie; und
Bestimmen (425, 435), wenn die gekrümmte Linie mindestens einen Punkt umfasst, der entweder eine horizontale oder eine vertikale Tangente aufweist, mindestens eines der ersten und zweiten Eckpunkte einer Teilform als einen desmindestens einen Punktes, der entweder eine horizontale oder eine vertikale Tangente aufweist.

2. Verfahren nach Anspruch 1, ferner umfassend, wenn die gekrümmte Linie mindestens einen Punkt umfasst, der entweder eine horizontale oder eine vertikale Tangente aufweist, ein Bestimmen der ersten und zweiten Eckpunkte einer Teilform als:
zwei benachbarte Punkte, die entweder eine horizontale oder eine vertikale Tangente aufweisen; oder
einen Endpunkt der gekrümmten Linie und einen benachbarten Punkt, der entweder eine horizontale oder eine vertikale Tangente aufweist.

3. Verfahren nach einem der Ansprüche 1 bis 2, wobei der Schritt des Bestimmens für jede der mindestens einen gekrümmten Linie, wenn sie mindestens einen Punkt umfasst, der entweder eine horizontale oder eine vertikale Tangente aufweist, ein Differenzieren der gekrümmten Linie umfasst.

4. Verfahren nach einem der Ansprüche 1 bis 3, wobei der dritte Eckpunkt bestimmt wird (410) als:
ein beliebiger Punkt eines Innenbereichs der Form; oder
ein beliebiger Punkt außerhalb der Form; oder
ein Punkt auf der Umrandung der Form.

5. Verfahren nach einem der Ansprüche 1 bis 4, wobei jede Teilform aus den ersten, zweiten und dritten Eckpunkten, einer ersten geraden Linie zwischen den ersten und dritten Eckpunkten, einer zweiten geraden Linie zwischen den zweiten und dritten Eckpunkten und entweder einer geraden oder einer gekrümmten Linie zwischen den ersten und zweiten Eckpunkten besteht.

6. Verfahren nach einem der Ansprüche 1 bis 5, wobei der Schritt des Erzeugens einer Maske, die mit Form assoziiert ist, die auf der Mehrzahl von Teilformen basiert, umfasst:
Verwenden (620) für jede Teilform des Begrenzungsfeldszum Erzeugen der Teilmaske, die mit der Teilform assoziiert ist, durch Zuordnen (860, 880, 1030, 1050) eines Wertes zu jedem Maskenelement der Teilmaske; und
Akkumulieren (640) der Werte jeder der Teilmasken, um die Maske zu erzeugen.

7. Verfahren nach Anspruch 6, wobei das Begrenzungsfeld als ein kleinstes Rechteck bestimmt wird, das mindestens die ersten, zweiten und dritten Eckpunkte einschließt, und wobei der Schritt des Verwendens des Begrenzungsfelds zum Erzeugen einer Teilmaske ein Bewerten von Maskenelementen umfasst, die im Begrenzungsfeld eingeschlossen sind.

8. Verfahren nach einem der Ansprüche 6 bis 7, wobei der Schritt des Erzeugens einer Maske, die mit der Form assoziiert ist, die auf einer Mehrzahl von Teilformen basiert, ein Bestimmen einer Ausrichtung der Teilform für jede Teilform umfasst, und wobei der zugeordnete Wert von der Ausrichtung abhängt.

9. Verfahren nach Anspruch 8, wobei der Schritt des Bestimmens der Ausrichtung der Teilform umfasst:
Bestimmen (1010), ob die Linie zwischen den ersten und zweiten Eckpunkten nach unten oder nach oben gezogen ist;
Bestimmen (1020), ob eine Abtastzeile zuerst die Linie zwischen den ersten und zweiten Eckpunkten oder eine andere Linie der Teilform findet;
Bestimmen der Ausrichtung als im Uhrzeigersinn (1030), wenn:
die Linie zwischen den ersten und zweiten Eckpunkten nach unten gezogen ist und die Abtastzeile zuerst eine andere Linie der Teilform findet; oder
die Linie zwischen den ersten und zweiten Eckpunkten nach oben gezogen ist und die Abtastzeile zuerst die Linie zwischen den ersten und zweiten Eckpunkten findet; und
Bestimmen der Ausrichtung andernfalls als gegen den Uhrzeigersinn (1050).

10. Verfahren nach Anspruch 9, wobei die Teilform eine erste Ausrichtung, die mit einer ersten Abtastzeile assoziiert ist, und eine zweite Ausrichtung aufweist, die mit einer zweiten Abtastzeile assoziiert ist, wobei die erste Ausrichtung von der zweiten Ausrichtung verschieden ist.

11. Verfahren nach einem der Ansprüche 9 bis 10, wobei das Zuordnen eines Wertes zu jedem Maskenelement der Teilmaske für jede Abtastzeile umfasst:
Zuordnen eines Wertes von null zu jedem Maskenelement, das nicht zwischen zwei Linien der Teilform ist;
Zuordnen eines ersten positiven Wertes zu jedem Maskenelement, das zwischen zwei Linien der Teilform ist, wenn die Ausrichtung gegen den Uhrzeigersinn ist; und
Zuordnen eines ersten negativen Wertes zu jedem Maskenelement, das zwischen zwei Linien der Teilform ist, wenn die Ausrichtung im Uhrzeigersinn ist.

12. Verfahren nach Anspruch 11, wobei das Zuordnen eines Wertes zu jedem Maskenelement der Teilmaske ferner umfasst:
Zuordnen eines zweiten positiven Wertes, der kleiner als der erste positive Wert ist, zu jedem Maskenelement, das teilweise zwischen zwei Linien der Teilform ist, wenn die Ausrichtung gegen den Uhrzeigersinnist; und
Zuordnen eines zweiten negativen Wertes, der größer als der erste negative Wert ist, zu jedem Maskenelement, das teilweise zwischen zwei Linien der Teilform ist, wenn die Ausrichtung im Uhrzeigersinn ist.

13. Verfahren nach einem der Ansprüche 6 bis 7, wobei das Zuordnen eines Wertes zu jedem Maskenelement der Teilmaske für jede Abtastzeile umfasst:
für jede Line der Teilform:
Bestimmen (810), auf welcher Seite einer geraden Linie zwischen den Eckpunkten der Linie ein anderer Eckpunkt der Teilform ist; und
Kennzeichnen (820) eines Maskenelements mit einer Wahr- oder Falsch-Markierung basierend auf der Bestimmung dessen, auf welcher Seite der andere Eckpunkt ist;
Zuordnen (860) eines ersten Nicht-Null-Werts zu jedem Maskenelement, das **gekennzeichnet** ist entweder:
nur mit Wahr-Markierungen (850); oder
mit einer Falsch-Markierung, die mit einer gekrümmten Linie der Teilform assoziiert ist, und einer Falsch-Markierung, die mit einer geraden Linie der Teilform assoziiert ist (870); und
Zuordnen 880) eines Wertes von null zu allen anderen Maskenelementen.

14. Verfahren nach Anspruch 13, wobei das Zuordnen eines Wertes zu jedem Maskenelement der Teilmaske ferner umfasst:
für jede Linie der Teilform:
Kennzeichnen (820) eines Maskenelements mit einer Gradientenmarkierung, wenn das Maskenelement auf der geraden Linie zwischen den Eckpunkten einer Linie ist; und
Zuordnen (860) eines zweiten Nicht-Null-Werts, wobei der absolute Wert des zweiten Nicht-Null-Werts kleiner als der absolute Wert des ersten Nicht-Null-Werts ist, zu jedem Maskenelement, das mit mindestens einer Gradientenmarkierung **gekennzeichnet** ist.

15. Verfahren nach einem der Ansprüche 6 bis 14, wobei die Form basierend auf den akkumulierten Werten der Maske gefüllt wird.

16. Computerprogrammprodukt, umfassend ein computerlesbares Medium, das ein Computerprogramm darauf aufweist, das Programmanweisungen umfasst, wobei das Computerprogramm in eine Datenverarbeitungseinheit geladen werden kann und so ausgelegt ist, dass es die Datenverarbeitungseinheit veranlasst, Verfahrensschritte nach einem der Ansprüche 1 bis 15 auszuführen, wenn das Computerprogramm durch die Datenverarbeitungseinheit ausgeführt wird.

17. Anordnung zum Füllen einer Form, die eine Umrandung mit mindestens einer gekrümmten Linie aufweist, umfassend:
Parkettierungsschaltung (1330, 1314'), die so ausgelegt ist, dass sie die Form in eine Mehrzahl von Teilformen teilt, welche jeweils mindestens erste, zweite und dritte Eckpunkte umfassen, wobei wenigstens die ersten und zweiten Eckpunkte einer Teilform Punkte der Umrandung der Form sind, wobei die ersten und zweiten Eckpunkte einer Teilform als ein erster und zweiter Endpunkt einer Linie der Umrandung bestimmt werden, wenn die Linie eine gerade Linie ist, und wobei der dritte Eckpunkt für alle der Mehrzahl von Teilformen identisch ist;
Rasterungsschaltung (1340, 1315'), die so ausgelegt ist, dass sie eine Maske erzeugt, die Maskenelemente umfasst und mit der Form assoziiert ist, die auf der Mehrzahl von Teilformen basiert, indem sie für jede Teilform ein Begrenzungsfeld bestimmt, das auf mindestens den ersten, zweiten und dritten Eckpunkten basiert, und das Begrenzungsfeld zum Erzeugen einer Teilmaske verwendet, die mit der Teilform assoziiert ist; und
eine Zeichenschaltung (1340, 1316'), die so ausgelegt ist, dass sie die Form basierend auf der Maske füllt;
**dadurch gekennzeichnet, dass**:
die Parkettierungsschaltung (1330, 1314') ferner ausgelegt ist zum:
Bestimmen für jede der mindestens einen gekrümmten Linie, ob sie mindestens einen Punkt umfasst, der entweder eine horizontale oder eine vertikale Tangente aufweist;
Bestimmen, wenn die gekrümmte Linie nicht mindestens einen Punkt umfasst, der entweder eine horizontale oder eine vertikale Tangente aufweist, der ersten und zweiten Eckpunkte einer Teilform als einen ersten und zweiten Endpunkt der gekrümmten Linie; und
Bestimmen, wenn die gekrümmte Linie mindestens einen Punkt umfasst, der entweder eine horizontale oder eine vertikale Tangente aufweist, mindestens eines der ersten und zweiten Eckpunkte einer Teilform als einen desmindestens einen Punktes, der entweder eine horizontale oder eine vertikale Tangente aufweist.

18. Anordnung nach Anspruch 17, wobei die Parkettierungsschaltung (1330, 1314') ferner so ausgelegt ist, dass sie, wenn die gekrümmte Linie mindestens einen Punkt umfasst, der entweder eine horizontale oder eine vertikale Tangente aufweist, die ersten und zweiten Eckpunkte einer Teilform bestimmt als:
zwei benachbarte Punkte, die entweder eine horizontale oder eine vertikale Tangente aufweisen; oder
einen Endpunkt der gekrümmten Linie und einen benachbarten Punkt, der entweder eine horizontale oder eine vertikale Tangente aufweist.

19. Anordnung nach einem der Ansprüche 17 bis 18, wobei die Parkettierungsschaltung (1330, 1314') so ausgelegt ist, dass sie die gekrümmte Linie differenziert, um für jede der mindestens einen gekrümmten Linie zu bestimmen, ob sie mindestens einen Punkt umfasst, der entweder eine horizontale der eine vertikale Tangente aufweist.

20. Anordnung nach einem der Ansprüche 17 bis 19, wobei die Rasterungsschaltung (1340, 1315') ausgelegt ist zum:
Verwenden für jede Teilform des Begrenzungsfelds, um die Teilmaske zu erzeugen, die mit der Teilform assoziiert ist, indem sie einen Wert zu jedem Maskenelement der Teilmaske zuordnet; und
Akkumulieren der Werte jeder der Teilmasken, um die Maske zu erzeugen.

21. Anordnung nach Anspruch 20, wobei die Rasterungsschaltung (1340, 1315') so ausgelegt ist, dass sie eine Ausrichtung der Teilform für jede Teilform bestimmt und den Wert basierend auf der Ausrichtung zuordnet.

22. Anordnung nach Anspruch 20, wobei die Rasterungsschaltung (1340, 1315')ferner so ausgelegt ist, dass sie für jede Linie der Teilform:
bestimmt, auf welcher Seite einer geraden Linie zwischen den Eckpunkten der Linie ein anderer Eckpunkt der Teilform ist; und
ein Maskenelementbasierend auf der Bestimmung dessen, auf welcher Seite der andere Eckpunkt ist, mit einer Wahr- oder Falsch-Markierung kennzeichnet;
einen ersten Nicht-Null-Wert zu jedem Maskenelement zuordnet, das **gekennzeichnet** ist entweder:
nur mit Wahr-Markierungen; oder
mit einer Falsch-Markierung, die mit einer gekrümmten Linie der Teilform assoziiert ist, und einer Falsch-Markierung, die mit einer geraden Linie der Teilform assoziiert ist; und
allen anderen Maskenelementen einen Wert von null zuordnet.

23. Verfahren nach einem der Ansprüche 20 bis 22, wobei die Zeichenschaltung (1340, 1316') so ausgelegt ist, dass sie die die Form basierend auf den akkumulierten Werten der Maske füllt.

24. Anordnung nach einem der Ansprüche 17 bis 23, ferner umfassend:
eine grafische Schnittstelle (1319', 1420); und
Anwendungsspeicher- und -verarbeitungsmittel (1320, 1320', 1321').

## Revendications

1. Procédé de remplissage d'une forme, approprié à une utilisation dans un dispositif ayant des capacités de traitement graphique, dans lequel la forme a une limite avec au moins une ligne courbe, comprenant de :
diviser (510) la forme en une pluralité de sous-formes, comprenant chacune au moins un premier, second et troisième sommet, dans lequel au moins le premier et le second sommets d'une sous-forme sont des points de la limite de la forme, dans lequel le premier et le second sommets d'une sous-forme sont déterminés (425) comme un premier et un second point d'extrémité d'une ligne de la limite si la ligne est une ligne droite, et dans lequel le troisième sommet est identique pour toutes de la pluralité de sous-formes ;
créer (520) un masque comprenant des éléments de masque et associé à la forme basée sur la pluralité de sous-formes en déterminant (610), pour chaque sous-forme, une case de caractère basée sur au moins le premier, second et troisième sommets, et utiliser (620) la case de caractère pour créer un sous-masque associé à la sous-forme ; et
utiliser (530) le masque pour remplir la forme ;
**caractérisé par**:
déterminer(430), pour chacune des au moins une lignes courbes, si elle comprend au moins un point ayant une tangente soit horizontale, soit verticale ;
si la oigne courbe ne comprend pas au moins un point ayant une tangente soit horizontale, soit verticale, déterminer (425) le premier et second sommets d'une sous-forme comme un premier et second point d'extrémité de la ligne courbe ; et
si la ligne courbe comprend au moins un point ayant une tangente soit horizontale, soit verticale, déterminer (425,435) au moins un du premier et second sommet d'une sous-forme comme un des au moins un points ayant une tangente soit horizontale, soit verticale.

2. Procédé selon la revendication 1, comprenant en outre, si la ligne courbe comprend au moins un point ayant une tangente soit horizontale, soit verticale, de déterminer le premier et second sommet d'une sous-forme comme :
deux po ints adjacents ayant une tangente soit horizontale, soit verticale ; ou
un point d'extrémité de la ligne courbe et un point adjacent ayant une tangente soit horizontale, soit verticale.

3. Procédé selon une quelconque des revendications 1 à 2, dans lequel l'étape de détermination, pour chacune des au moins une lignes courbes, si elle comprend au moins un point ayant une tangente soit horizontale, soit verticale comprend de différencier la ligne courbe.

4. Procédé selon une quelconque des revendications 1 à 3, dans lequel le troisième sommet est déterminé (410) comme :
un point arbitraire d'un intérieur de la forme ; ou
un point arbitraire externe à la forme ; ou
un point sur la limite de la forme.

5. Procédé selon une quelconque des revendications 1 à 4, dans lequel chaque sous-forme est constituée du premier, second et troisième sommet, une première ligne droite entre le premier et troisième sommet, une seconde ligne droite entre le second et troisième sommet, soit une ligne soit droite, soit courbe entre le premier et second sommet.

6. Procédé selon une quelconque des revendications 4 à 5, dans lequel l'étape de création d'un masque associé à la forme basée sur la pluralité de sous-formes comprend de :
utiliser (620), pour chaque sous-forme, la case de caractère pour créer ledit sous-masque associé à la sous-forme en assignant (860,880,1030,1050) une valeur à chaque élément de masque de sous-masque ; et
accumuler (640) les valeurs de chacun des sous-masques pour créer le masque.

7. Procédé selon la revendication 6, dans lequel la case de caractère est déterminée comme un rectangle minimal renfermant au moins le premier, second et troisième sommet, et dans lequel l'étape d'utilisation de la case de caractère pour créer un sous-masque comprend d'évaluer des éléments de masque renfermés dans la case de caractère.

8. Procédé selon une quelconque des revendications 6 à 7, dans lequel l'étape de création d'un masque associé à la forme basée sur la pluralité de sous-formes comprend de déterminer une orientation de la sous-forme pour chaque sous-forme, et dans lequel la valeur assignée dépend de l'orientation.

9. Procédé selon la revendication 8, dans lequel l'étape de détermination de l'orientation de la sous-forme comprend de :
déterminer (1010) si la ligne entre le premier et second sommet est dessinée vers le bas ou vers le haut ;
déterminer (1020) si une ligne de balayage rencontre d'abord la ligne entre le premier et second sommet ou une autre ligne de la sous-forme ;
déterminer l'orientation comme en sens horaire (1030) si :
la ligne entre le premier et second sommet est dessinée vers le bas et la ligne de balayage rencontre d'abord une autre ligne de la sous-forme ; ou
la ligne entre le premier et second sommet est dessinée vers le haut et la ligne de balayage rencontre d'abord la ligne entre le premier et second sommet ; et
déterminer sinon l'orientation comme en sens anti-horaire (1050).

10. Procédé selon la revendication 9, dans lequel la sous-forme a une première orientation associée à une première ligne de balayage et une seconde orientation associée à une seconde ligne de balayage, la première orientation étant différente de la seconde orientation.

11. Procédé selon une quelconque des revendications 9 à 10, dans lequel assigner une valeur à chaque élément de masque du sous-masque comprend de, pour chaque ligne de balayage :
assigner une valeur de zéro à chaque élément de masque qui n'est pas entre deux lignes de la sous-forme ;
assigner une première valeur positive à chaque élément de masque qui est entre deux lignes de la sous-forme si l'orientation est en sens anti-horaire ; et
assigner une première valeur négative à chaque élément de masque qui est entre deux lignes de la sous-forme si l'orientation est en sens horaire.

12. Procédé selon la revendication 11, dans lequel assigner une valeur à chaque élément de masque du sous-masque comprend en outre de :
assigner une seconde valeur positive inférieure à la première valeur positive à chaque élément de masque qui est partiellement entre deux lignes de la sous-forme si l'orientation est en sens anti-horaire ; et
assigner une seconde valeur négative supérieure à la première valeur négative à chaque élément de masque qui est partiellement entre deux lignes de la sous-forme si l'orientation est en sens horaire.

13. Procédé selon une quelconque des revendications 6 à 7, dans lequel assigner une valeur à chaque élément de masque du sous-masque comprend de :
pour chaque ligne de la sous-forme :
déterminer (810) sur quel côté d'une ligne droite entre les sommets de la ligne se trouve un autre sommet de la sous-forme ; et
baliser (820) un élément de masque avec une balise vrai ou faux basée sur la détermination du côté sur lequel se trouve l'autre sommet ;
assigner (860) une première valeur non zéro à chaque élément de masque balisé avec soit :
seulement des balises vrai (850) ; ou
une balise faux associée à une ligne courbe de la sous-forme et une balise faux associée à une ligne droite de la sous-forme (870) ; et
assigner (880) une valeur de zéro à tous les autres éléments de masque.

14. Procédé selon la revendication 13, dans lequel assigner une valeur à chaque élément de masque du sous-masque comprend en outre de :
pour chaque ligne de la sous-forme :
baliser (820) un élément de masque avec une balise de gradient si l'élément de masque est sur la ligne droite entre les sommets de la ligne ; et
assigner (860) une seconde valeur non zéro, dans lequel la valeur absolue de la seconde valeur non zéro est inférieure à la valeur absolue de la première valeur non zéro, à chaque élément de masque balisé avec au moins une balise de gradient.

15. Procédé selon une quelconque des revendications 6 à 14, dans lequel la forme est remplie sur la base des valeurs accumulées du masque.

16. Produit de programme informatique comprenant un support lisible par ordinateur, comportant un programme informatique comprenant des instructions de programme, le programme informatique étant chargeable dans une unité de traitement de données et adapté pour amener l'unité de traitement de données à exécuter des étapes de procédé selon une quelconque des revendications 1 à 15 quand le programme informatique est exécuté par l'unité de traitement de données.

17. Agencement de remplissage d'une forme ayant une limite avec au moins une ligne courbe, comprenant :
un circuit de tessellation (1330,1314') adapté pour diviser la forme en une pluralité de sous-formes, comprenant chacune au moins un premier, second et troisième sommet, dans lequel au moins le premier et second sommet d'une sous-forme sont des points de la limite de la forme, dans lequel le premier et second sommet d'une sous-forme sont déterminés comme un premier et second point d'extrémité d'une ligne de la limite si la ligne est une ligne droite, et dans lequel le troisième sommet est identique pour toutes de la pluralité de sous-formes ;
un circuit de pixélisation (1340,1316') adapté pour remplir la base sur la base du masque ;
**caractérisé en ce** qui :
le circuit de tessellation (1330,1314') est en outre adapté pour :
déterminer, pour chacune des au moins une lignes courbes, si elle comprend au moins un point ayant une tangente soit horizontale, soit verticale ;
si la ligne courbe ne comprend pas au moins un point ayant une tangente soit horizontale, soit verticale, déterminer le premier et second sommet d'une sous-forme comme un premier et second point d'extrémité de la ligne courbe ; et
si la ligne courbe comprend au moins un point ayant une tangente soit horizontale, soit verticale, déterminer au moins un du premier et second sommet d'une sous-forme comme un des au moins un points ayant une tangente soit horizontale, soit verticale.

18. Agencement selon la revendication 17, dans lequel le circuit de tessellation (1330,1314') est en outre adapté pour, si la ligne courbe comprend au moins un point ayant une tangente soit horizontale, soit verticale, déterminer le premier et second sommet d'une sous-forme comme :
deux points adjacents ayant une tangente soit horizontale, soit verticale ; ou
un point d'extrémité de la ligne courbe et un point adjacent ayant une tangente soit horizontale, soit verticale.

19. Agencement selon une quelconque des revendications 17 à 18, dans lequel le circuit de tessellation (1330,1314') est adapté pour différencier la ligne courbe pour déterminer, pour chacune des au moins une lignes courbes, si elle comprend au moins un point ayant une tangente soit horizontale, soit verticale.

20. Agencement selon une quelconque des revendications 17 à 19, dans lequel le circuit de pixélisation (1340,1315') est adapté pour :
utiliser, pour chaque sous-forme, la case de caractère pour créer ledit sous-masque associé à la sous-forme en assignant une valeur à chaque élément de masque du sous-masque ; et
accumuler les valeurs de chacun des sous-masques pour créer le masque associé à la forme.

21. Agencement selon la revendication 20, dans lequel le circuit de pixélisation (1340,1315') est adapté pour déterminer une orientation de la sous-forme pour chaque sous-forme, et assigner la valeur sur la base de l'orientation.

22. Agencement selon la revendication 20, dans lequel le circuit de pixélisation (1340,1315') est en outre adapté pour, pour chaque ligne de la sous-forme :
déterminer sur quel côté d'une ligne droite entre les sommets de la ligne, se trouve un autre sommet de la sous-forme ; et
baliser un élément de masque avec une balise vrai ou faux basée sur la détermination du côté sur lequel se trouve un autre sommet ;
assigner une première valeur non zéro à chaque élément de masque balisé avec soit :
seulement des balises Vrai ; ou
une balise faux associée à une ligne courbe de la sous-forme et une balise faux associée à une ligne droite de la sous-forme ; et
assigner une valeur de zéro à tous les autres éléments de masque.

23. Agencement selon une quelconque des revendications 20 à 22, dans lequel le circuit de peinture (1340,1316') est adapté pour remplir la forme sur la base des valeurs accumulées du masque.

24. Agencement selon une quelconque des revendications 17 à 23 comprenant en outre :
une interface graphique (1319',1420) ; et
un moyen de traitement et mémorisation d'application (1320,1320',1321').
